# EUROPÄISCHE PATENTANMELDUNG

(11) **EP 1 283 187 A2**
(43) Veröffentlichungstag der Anmeldung: **12.02.2003**
(21) Anmeldenummer: 02013221.3
(22) Anmeldetag: 15.06.2002
(51) Int. Cl.: B65H 27/00

(54) **Walze zur Führung von bahnenförmigem Material**

(30) Priorität: 20.07.2001 DE 20111827 U
(71) Anmelder: LÜRAFLEX GMBH GERHARD LÜCKENOTTO, 41460 Neuss/Heerdt (DE)
(72) Erfinder: Giovannelli, Armando, 45149 Essen (DE)
(74) Vertreter: Berkenbrink, Kai-Oliver

(57) **Zusammenfassung**

Die Erfindung betrifft eine Walze (1) zur Führung von bahnenförmigem Material mit einer Tragwelle (3) und einem auf der Tragwelle rotationssymmetrisch angeordneten, verformbaren Belag (5) mit einer Rauhtiefe über 10 µm.

## Beschreibung

Die Erfindung betrifft eine Walze zur Führung von bahnenförmigem Material.

Solche Walzen bestehen üblicherweise aus einer Tragwelle und einem auf der Tragwelle rotationssymmetrisch angeordneten, verformbaren Belag.

Mehrere Walzen können in einer Reihe hintereinander angeordnet sein, so dass sie eine Transportstrasse für den Transport von bahnenförmigem Material bilden.

Die Walzen dienen zum Transport von bahnenförmigem Material beispielsweise von Material in Form von Stahlbändern, Papier, Kunststofffolien oder Textilien. Der verformbare Belag der Walze kann sich an die Oberfläche des bahnenförmigem Materials anschmiegen, so dass das bahnenförmige Material durch den insoweit guten Kontakt zur Walze sicher durch diese geführt werden kann.

Manche bahnenförmigen Materialien neigen dazu, an der Oberfläche des Belages der Walze anzuhaften. Diese Anhaftung kann beispielsweise durch eine physikalische Wechselwirkung zwischen Belagsmaterial und bahnenförmigem Material hervorgerufen sein, etwa durch Adhäsionskräfte. Eine Anhaftung kann auch durch chemische Wechselwirkungen zwischen Belagsmaterial und bahnenförmigem Material bedingt sein, beispielsweise wenn das bahnenförmige Material auf seiner mit dem Belag in Kontakt kommenden Fläche mit einem klebrigen oder sonstigen anhaftenden Material beschichtet ist.

Um die Anhaftung zwischen Belagsmaterial und bahnenförmigem Material herabzusetzen ist es bekannt, spezielle Walzenbeschichtungen einzusetzen. Dazu sind beispielsweise spezielle Materialien auf Silikon- oder Teflonbasis bekannt. Diese Materialien können auf die Walzenoberfläche aufgetragen oder in Form von Schläuchen aufgezogen werden. Nachteilig ist, dass diese Materialien verhältnismäßig teuer sind und der Kontakt zwischen Walze und bahnenförmigem Material nicht immer zufriedenstellend ist, so dass es zu einem ungewünschten "Schlupf" zwischen Walze und bahnenförmigem Material kommen kann.

Der Erfindung liegt die Aufgabe zugrunde, eine Walze zur Führung von bahnenförmigem Material mit einer Tragwelle und einem auf der Tragwelle rotationssymmetrisch angeordneten, verformbaren Belag zur Verfügung zu stellen, die einfach und kostengünstig herzustellen ist, die antihaftende beziehungsweise antiadhäsive Eigenschaften aufweist und gleichzeitig einen guten Kontakt zwischen Walze und bahnenförmigem Material ermöglicht.

Es hat sich herausgestellt, dass diese Aufgabe auf überraschend einfache Weise dadurch gelöst werden kann, dass die Oberfläche des Belages, die in Kontakt mit dem bahnenförmigem Material tritt, mit einer Rauhtiefe über 10 µm ausgebildet wird.

In ihrer allgemeinsten Ausführungsform schlägt die Erfindung daher eine Walze zur Führung von bahnenförmigem Material mit einer Tragwelle und einem auf der Tragwelle rotationssymmetrisch angeordneten, verformbaren Belag mit einer Rauhtiefe über 10 µm vor.

Bei dieser Walze ist zur Herabsetzung der Anhaftuna damit kein Spezialmaterial wie Teflon notwendig, sondern es kann ein einfacheres verformbares Material für den Belag verwendet werden.

Unter "Rauhtiefe" wird im Sinne der Erfindung die gemittelte Rauhtiefe R_{z} verstanden, die ein arithmetisches Mittel aus den Einzelrauhtiefen 5 aneinandergrenzender Einzelmessstrecken auf der Belagsoberfläche darstellt, und beispielsweise nach DIN 4768 bestimmt werden kann.

Die antihaftende beziehungsweise antiadhäsive Wirkung des Belages scheint darauf zu beruhen, dass die Oberfläche des Belages nur eine sehr kleine Auflege- beziehungsweise Berührungsfläche aufweist und dem bahnenförmigem Material damit keine Möglichkeit bietet, auf dem Belag zu haften, da dessen Oberfläche zu gering ist.

Die Rauhigkeit kann grundsätzlich beliebig, also beispielsweise regelmäßig oder unregelmäßig ausgebildet sein.

Es kann vorgesehen sein, die Rauhtiefe über 20 µm vorzusehen; damit kann die antihaftende beziehungsweise antiadhäsive Wirkung der Walze teilweise noch gesteigert werden.

Nach einer weiteren Ausführungsform kann vorgesehen sein, die Rauhtiefe zwischen 10 und 80 µm, beispielsweise auch zwischen 10 und 60 µm, zwischen 20 und 50 µm oder zwischen 20 und 40 µm vorzusehen.

Der verformbare Belag kann beispielsweise aus einem elastomeren Material bestehen, zum Beispiel Silikon, Silikonverschnitt, chlorsulfoniertem Polyethylen (beispielsweise HYPALON®) oder Material auf Basis Kautschuk.

Die Walze kann beispielsweise als Breitstreckwalze oder Separierwalze eingesetzt werden, wozu der Belag auf seiner Oberfläche mit Einschnitten versehen sein kann.

Die Kontur des Belages kann grundsätzlich beliebig ausgebildet sein. So kann der Belag beispielsweise im wesentlichen zylindrisch ausgebildet sein. Es liegt auch im Rahmen der Erfindung, den Belag "bombiert" (mit seinem größten Durchmesser im Bereich der Mittelebene) oder "tailliert" (mit seinem kleinstem Durchmesser im Bereich der Mittelebene) auszubilden.

Die Walze kann von außen ansteuerbar und dadurch antreib- oder abbremsbar sein. Sie kann beispielsweise als Steuer-, Antriebs- oder Bremswalze eingesetzt werden.

Weitere Merkmale der Erfindung ergeben sich aus den Unteransprüchen sowie den sonstigen Anmeldungsunterlagen.

Ein -stark schematisiertes- Ausführungsbeispiel einer erfindungsgemäßen Walze wird in der nachfolgenden Figurenbeschreibung näher erläutert.

Dabei zeigt

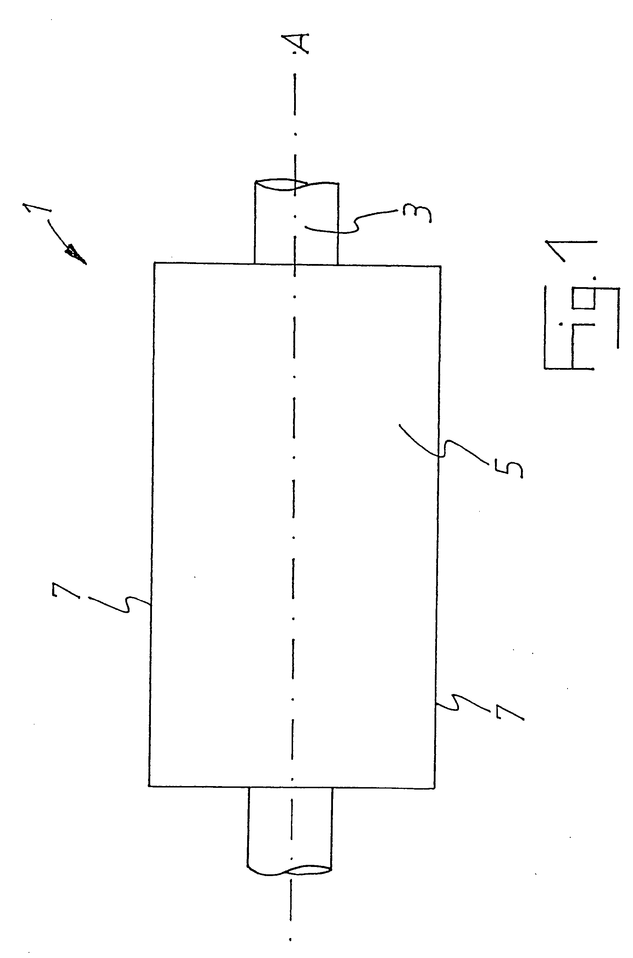

Figur 1 eine Walze in einer Schnittansicht parallel zur Achse der Tragwelle.

Figur 1 zeigt die Tragwelle 3 und den Belag 5 der Walze 1.

Bei der Tragwelle 3 handelt es sich um zylindrisches Rohr aus Stahl, das um die Achse A rotierbar gelagert ist. Rotationssymmetrisch um die Tragwelle 3 ist der verformbare Belag 5 aus Silikon angeordnet. Der Belag 5 weist eine im wesentlichen zylindrische Gestalt auf. Die in Kontakt mit einem bahnenförmigen Material (nicht dargestellt) tretende Oberfläche 7 des Belages 5 weist eine Rauhtiefe von etwa 30 µm auf.

## Patentansprüche

1. Walze zur Führung von bahnenförmigem Material mit einer Tragwelle (3) und einem auf der Tragwelle (3) rotationssymmetrisch angeordneten, verformbaren Belag (5) mit einer Rauhtiefe über 10 µm.

2. Walze nach Anspruch 1 mit einer Rauhtiefe über 20 µm.

3. Walze nach Anspruch 1 mit einer Rauhtiefe zwischen 10 und 80 µm.

4. Walze nach Anspruch 1 mit einer Rauhtiefe zwischen 20 und 40 µm.

5. Walze nach Anspruch 1 mit einem elastomeren Belag (5).

6. Walze nach Anspruch 1 mit einem Belag (5) aus Silikon.

7. Walze nach Anspruch 1, bei der der Belag (5) Einschnitte aufweist.
